# FASCICULE DE BREVET EUROPEEN

(11) **EP 2 610 317 B1**
(45) Date de publication et mention de la délivrance du brevet: **19.08.2015**
(21) Numéro de dépôt: 12198376.1
(22) Date de dépôt: 20.12.2012
(51) Int. Cl.: C09D 5/20, C09J 133/06

(54) **Composition de colle pelable**
Zusammensetzung eines abziehbaren Klebers
Peelable adhesive composition

(30) Priorité: 26.12.2011 FR 1162448
(43) Date de publication de la demande: 03.07.2013
(73) Titulaire: BOSTIK SA, 93210 La Plaine Saint Denis (FR)
(72) Inventeur: Casimiro, Jessie, 77170 BRIE COMTE ROBERT (FR); Verscheure, Eric, 77670 VERNOU LA CELLE SUR SEINE (FR)
(74) Mandataire: Hirsch & Associés

(56) Documents cités:
- CA-C- 2 145 244
- US-A- 4 814 168

## Description

### DOMAINE TECHNIQUE

La présente invention concerne une composition de colle pelable. L'invention concerne également une membrane pelable obtenue par séchage de la composition de colle selon l'invention. L'invention a également pour objet l'association d'un revêtement de surface avec la composition de colle pelable, et un procédé d'application d'un revêtement de surface. L'invention concerne également un procédé de rénovation d'un revêtement de surface.

### ETAT DE LA TECHNIQUE

Le remplacement d'un revêtement de sol souple est une opération qui pose depuis longtemps de nombreux problèmes aux professionnels et aux particuliers.

Il existe des solutions de fixation non définitive du revêtement, soit par l'utilisation de bandes adhésives double face soit par l'utilisation d'un fixateur constitué d'un auto-adhésif. Ces solutions permettent une rénovation rapide des locaux mais elles sont à réserver aux pièces résidentielles à faible fréquence de passage. En effet la résistance de la fixation et la durabilité du collage sont faibles. En outre, l'utilisation de bandes adhésives double face provoque des surépaisseurs qui peuvent entraîner des cloques lors de déplacements de meubles ou engendrer l'apparition de traces sur le PVC (appelées fantômes).

Dans le cas d'une fixation à l'aide de colles classiques qui est la solution courante à ce jour, le remplacement pour rénovation d'un revêtement de sol souple préalablement collé (par exemple une moquette), implique une succession d'étapes longues et fastidieuses avant de pouvoir recoller un revêtement neuf. Il faut supprimer les anciens revêtements par arrachage dans un premier temps, puis il convient d'enlever les résidus de colle. On a alors recours soit à des outils manuels (scrapers) soit à l'assistance d'un décolleur ou d'un décapant solvanté.

En cas d'irrégularités il faut encore procéder au ponçage ainsi qu'au ragréage du sol à l'aide d'un enduit de lissage avant de pouvoir appliquer une nouvelle couche de colle pour fixer le revêtement neuf.

En outre, de la colle et potentiellement des résidus de liant inorganique comme du ragréage restent fixés sur le revêtement ancien, ce qui constitue un obstacle à son recyclage.

Dans le cas de surfaces importantes comme des locaux commerciaux, le remplacement du revêtement nécessitera la fermeture des locaux pendant un temps relativement long nécessaire pour l'ensemble des étapes de remise à neuf.

Cette problématique se retrouve encore pour les murs, avec des revêtements de type toile de verre.

Le document DE 10 029 964 décrit une colle en dispersion aqueuse pour revêtement de sol souple comprenant une dispersion de polymères acryliques, une résine tackifiante et une charge minérale. Cette composition permet une rupture facile au coeur de la colle (rupture cohésive) mais cette composition ne résout pas les problèmes liés aux résidus de colle restant sur le substrat et qui devront être retirés au moyen d'un solvant ou par des outils mécaniques particuliers. Elle ne permet pas non plus le recyclage du revêtement.

Le document EP 0 911 463 décrit un revêtement pelable comprenant une couche supérieure durable et une sous-couche anti-adhésive (« release coating »). La couche durable est une couche de type résine époxy, donc une couche dure, ou polyuréthane. La couche anti-adhésive a une adhésion plus importante sur la couche durable que sur le support. De telles couches sont par exemple des couches en latex. Une couche barrière par exemple à base de cire peut aussi être prévue en lieu et place de la couche anti-adhésive en latex.

Le document US 4,824,498 décrit un revêtement de surface comprenant une succession de couches. Une première couche non pelable est fixée sur le sol, une seconde couche pelable est appliquée sur la première couche puis une couche cellulaire non pelable est appliquée, enfin, le revêtement de surface, généralement une moquette, est collé sur la couche cellulaire. Ce revêtement de surface ne résout pas les problèmes liés aux résidus de colle restant sur le substrat et ne permet pas non plus le recyclage du revêtement.

Il n'existe donc pas, à ce jour de solution de collage simple, résistante et en particulier une solution adaptée pour les locaux à fort trafic pouvant ultérieurement être retirée aisément et rapidement afin de retrouver, d'une part le substrat d'origine pour une rénovation, et éventuellement d'autre part le revêtement souple d'origine pour un recyclage.

### RESUME DE L'INVENTION

Le but de la présente invention est de fournir une composition de colle palliant au moins partiellement les inconvénients précités.

A cette fin, la présente invention propose une composition de colle comprenant :
- de 10% à 40% en poids d'au moins un latex naturel,
- de 10% à 40% en poids de matière sèche par rapport au poids total de la composition de colle, d'au moins une composition polymérique ayant une température de transition vitreuse allant de -50°C à 0°C, ladite composition polymérique comprenant :
   o au moins un copolymère ou un mélange d'au moins deux polymères comprenant au moins un monomère (meth)acrylate ou (meth)acrylique, et/ou
   o au moins un mélange d'au moins deux polymères comprenant au moins un polyester et au moins un polyuréthane, et/ou
   o au moins un copolymère d'acétate de vinyle et d'éthylène.

Selon un mode de réalisation de l'invention, la composition de colle comprend en outre de 10% à 40% en poids d'au moins une charge ayant une densité apparente allant de 1,30 à 1,70.

Selon un mode de réalisation de l'invention, le latex naturel représente de 15% à 35%, de préférence de 20% à 30% en poids du poids total de la composition de colle.

Selon un mode de réalisation de l'invention, la composition polymérique représente de 10% à 25%, de préférence de 12% à 20% en poids de matière sèche par rapport au poids total de la composition de colle.

Selon un mode de réalisation de l'invention, la ou les charges représentent de 15% à 35%, de préférence de 20% à 30% en poids du poids total de la composition.

Selon un mode de réalisation de l'invention, la composition de colle comprend en outre jusqu'à 10% en poids d'une résine tackifiante, de préférence choisie parmi les esters de colophane, les résines terpéniques, les résines terpène phénoliques, les dispersions à base de résine terpène phénolique.

De préférence, le latex naturel est un latex naturel présentant une teneur en ammoniac allant de 0,2 à 1 % en poids par rapport au poids de latex naturel.

Selon un mode de réalisation, la charge est une charge minérale, de préférence choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice.

De préférence, la composition polymérique présente une température de transition vitreuse allant de -40°C à -10°C, de préférence de -37°C à -15°C.

Selon un mode de réalisation de l'invention, le copolymère est un terpolymère d'acétate de vinyle, d'éthylène et d'acrylate.

Selon un mode de réalisation, la composition polymérique comprend un terpolymère d'acétate de vinyle, d'éthylène et d'acrylate et un mélange d'un polyester et d'un polyuréthane.

Selon un mode de réalisation de l'invention, la composition de colle comprend en outre des fibres, de préférence des fibres de cellulose ou des fibres de verre ou des fibres naturelles, telles que coton, jute, viscose, sisal, ou des fibres synthétiques, telles que polyamide, polyester, polyacrylonitrile, polypropylène, polyéthylène, ou des fibres de caoutchouc.

L'invention concerne également une membrane obtenue par séchage de la composition de colle selon l'invention.

L'invention concerne également l'association d'un revêtement de surface souple avec une composition de colle selon l'invention.

L'invention concerne également un procédé d'application d'un revêtement de surface souple sur un substrat comprenant les étapes suivantes :
a) application d'une couche de composition de colle selon l'invention sur le substrat,
b) affichage du revêtement souple sur le substrat.

De préférence, la quantité de composition de colle appliquée est supérieure ou égale à 200 g/m², de préférence supérieure ou égale à 250 g/m², de préférence encore supérieure ou égale à 300 g/m², plus particulièrement supérieure ou égale à 350 g/m².

Selon un mode de réalisation de l'invention, le procédé d'application selon l'invention comprend avant l'étape a), une étape d'application d'une trame ou d'une bande d'armature non-tissée sur le substrat.

De préférence, la trame est choisie parmi un grillage, un matériau tissé ou non-tissé.

Selon un mode de réalisation de l'invention, le procédé d'application comprend entre les étapes a) et b), une étape supplémentaire de séchage de la composition de colle de façon à obtenir une membrane, suivie de l'application d'une composition de colle différente de celle selon l'invention, sur la membrane ainsi obtenue.

Selon un mode de réalisation de l'invention, le procédé d'application comprend une étape ultérieure de marouflage du revêtement de surface souple.

L'invention concerne également un substrat revêtu d'une membrane de colle pelable et d'un revêtement de surface souple.

De préférence, la membrane de colle pelable a une épaisseur supérieure ou égale à 100 µm, de préférence supérieure ou égale à 125 µm, plus particulièrement supérieure ou égale à 150 µm.

Selon un mode de réalisation de l'invention, la membrane de colle pelable a une épaisseur inférieure ou égale à 1 millimètre.

L'invention concerne également un procédé de rénovation d'un substrat selon l'invention comprenant une étape d'arrachage du revêtement de surface souple.

Selon un mode de réalisation de l'invention, le procédé de rénovation comprend une étape supplémentaire de recyclage du revêtement de surface souple.

Les avantages de la présente invention sont les suivants :
- La composition de l'invention est une composition de collage qui après séchage forme un film, aussi appelé membrane, pelable. Une seule composition permet donc d'assurer le collage et le décollage ultérieur du revêtement,
- la composition de l'invention permet après séchage de séparer facilement le revêtement souple du substrat, tout en laissant le support et le revêtement intacts sans pratiquement aucun résidu de colle,
- la composition de colle de l'invention offre un collage durable adapté aux locaux à fort trafic,
- la composition de colle de l'invention est aussi bien adaptée à une application aux sols qu'aux murs,
- le procédé d'application du revêtement de surface de l'invention est simple à mettre en oeuvre puisqu'il ne nécessite l'application que d'une seule couche de colle,
- le procédé de collage du revêtement de surface de l'invention ne nécessite pas l'emploi de plusieurs revêtements dont l'un resterait fixé durablement au sol,
- le procédé de collage de l'invention permet de coller tous types de revêtements, même ceux nécessitant l'utilisation d'une colle forte, tout en permettant de conserver un sol sans résidu de colle lors du retrait du revêtement,
- le revêtement et la colle pelable de l'invention peuvent être retirés manuellement, sans nécessiter l'utilisation d'outils de type scraper. Le film issu du séchage de la composition de colle peut être enlevé du substrat ou du revêtement sans utilisation de produits chimiques et sans avoir recours à un outillage mécanique particulier,
- l'invention permet un recyclage du revêtement, après décollage et retrait du film pelable, celui-ci étant dépourvu de résidu de colle.

D'autres caractéristiques et avantages de l'invention apparaîtront à la lecture de la description qui suit, d'un mode de réalisation préféré de l'invention, donné à titre d'exemple, et en référence au dessin annexé.

### BREVE DESCRIPTION DES FIGURES

La figure 1 est un schéma représentant un mode de réalisation de l'invention après application de la colle pelable (1) et du revêtement souple (2) sur un substrat (3).
La figure 2 est un schéma représentant l'état du substrat (3) et du revêtement souple (2) après rénovation.
La figure 3 est un schéma illustrant un procédé de collage d'un revêtement souple (2) faisant intervenir une trame ou une bande d'armature non-tissée (5).
La figure 4 est un schéma illustrant un procédé de collage d'un revêtement souple (2) dans lequel une colle classique (7) est appliquée sur la membrane de colle (1).

### DESCRIPTION DETAILLEE DE L'INVENTION

La présente invention propose une composition de colle pelable comprenant :
- de 10% à 40% en poids d'au moins un latex naturel, et
- de 10 à 40% en poids de matière sèche par rapport au poids total de la composition de colle, d'au moins une composition polymérique ayant une température de transition vitreuse allant de -50°C à 0°C, ladite composition polymérique comprenant :
   ∘ au moins un copolymère ou un mélange d'au moins deux polymères comprenant au moins un monomère (meth)acrylate ou (meth)acrylique, et/ou
   ∘ au moins un mélange d'au moins deux polymères comprenant au moins un polyester et au moins un polyuréthane, et/ou
   ∘ au moins un copolymère d'acétate de vinyle et d'éthylène.

Selon un mode de réalisation, la composition de colle pelable selon l'invention comprend en outre de 10% à 40% en poids d'au moins une charge ayant une densité apparente allant de 1,30 à 1,70.

Par composition de colle pelable, on entend une composition de colle qui après application sur un substrat et séchage forme un film, ou membrane, qui peut être facilement retiré sans laisser de résidus.

Selon la présente invention, le latex naturel peut être un latex naturel de grade standard, un latex naturel ayant une faible teneur en ammoniac, un latex naturel ayant une forte teneur en ammoniac. Généralement, l'eau représente de 30% à 45% du poids du latex naturel, typiquement 38,5% du poids du latex naturel. De préférence, le latex naturel est un latex naturel ayant une teneur en ammoniac allant de 0,2 à 1 % en poids par rapport au poids de latex natuel. On peut choisir un latex naturel ayant une faible teneur en ammoniac, c'est-à-dire généralement allant de 0,2% à 0,4%, typiquement 0,29% en poids par rapport au poids de latex naturel, ou bien un latex naturel ayant une forte teneur en ammoniac, c'est-à-dire généralement allant de 0,5 à 1% en poids par rapport au poids de latex naturel. Il est bien connu de l'homme du métier que l'ammoniac permet de stabiliser le latex naturel.

Les copolymères ou les polymères utilisés dans l'invention pour former la composition polymérique, peuvent être sous la forme d'une émulsion aqueuse ou sous la forme d'une poudre redispersable qui, après ajout d'eau, forme une solution aqueuse. La forme sous laquelle est employé le copolymère ou le mélange de polymères dépend de sa solubilité dans l'eau.

La densité apparente est mesurée par des méthodes classiques bien connues de l'homme du métier, par exemple par pesée d'un volume déterminé telle que décrite dans la partie expérimentale de la présente invention. La densité apparente est définie par le rapport entre la masse du matériau et le volume apparent de l'ensemble des grains.

La présence de la charge permet de contrôler et d'augmenter l'épaisseur du film de colle pelable sans augmenter son coût. Une épaisseur plus importante augmente la cohésion du film et facilite son retrait après séchage.

Selon un mode de réalisation de la présente invention, la charge est une charge minérale. De préférence la charge est choisie parmi le carbonate de calcium, le carbonate de magnésium, le sable, l'alumine, l'alumine hydratée, le silicate de magnésium, le silicate d'aluminium, le silicate de sodium, le silicate de potassium, le mica et la silice. Plus particulièrement, la charge est choisie parmi le carbonate de calcium et le sable.

On peut également envisager d'utiliser seule(s) ou en combinaison avec une ou plusieurs charges minérales, une ou plusieurs charges organiques.

Selon un mode de réalisation, le latex naturel représente de 15% à 35% en poids du poids total de la composition de colle, de préférence de 20% à 30% en poids du poids total de la composition de colle.

Selon un mode de réalisation, la composition polymérique représente de 10% à 25% en poids de matière sèche par rapport au poids total de la composition de colle, de préférence de 12% à 20% en poids de matière sèche par rapport au poids total de la composition de colle.

Selon un mode de réalisation, le ratio (m/m) entre la masse de latex naturel (masse humide) et la masse de composition polymérique (matière sèche) va de 0,5 à 5, de préférence de 1,2 à 2,5, typiquement est égal à environ 2.

Selon un mode de réalisation, la ou les charges représentent de 15% à 35% en poids du poids total de la composition de colle, de préférence de 20% à 30% en poids du poids total de la composition de colle.

Dans la composition de colle, l'eau est apportée par le latex naturel, par l'émulsion aqueuse de copolymère ou de mélange de polymères et par un ajout d'eau éventuel. En effet, en fonction de la dilution du copolymère ou du mélange de polymères, on peut être amené à ajouter de l'eau pour obtenir la concentration souhaitée de matière active.

Selon un mode de réalisation, l'eau représente de 20% à 60% en poids du poids total de la composition de colle, de préférence de 30% à 50% en poids du poids total de la composition de colle.

Selon un mode de réalisation de l'invention, la composition de colle pelable comprend un ou plusieurs autres additifs choisis parmi : un épaississant, un biocide, un antimousse, un stabilisant de latex naturel, un masquant d'odeur, un ajusteur de pH et/ou un anti-oxydant.

L'épaississant permet notamment de maintenir la ou les charges en suspension.

De préférence, l'épaississant est une solution aqueuse de polyacrylate de sodium ou une solution aqueuse de polyuréthane. Généralement l'épaississant a une température de transition vitreuse de l'ordre de 200°C, bien supérieure aux températures de transition vitreuse des copolymères ou des mélanges de polymères définis précédemment.

De préférence, l'épaississant représente de 0,2 à 5%, de préférence de 0,5% à 5% en poids du poids total de la composition de colle.

De préférence les autres additifs représentent de 0,5% à 5% en poids du poids total de la composition de colle.

De préférence, la composition polymérique a une température de transition vitreuse (Tg) allant de -40°C à -10°C, plus particulièrement de -37°C à -15°C. De manière classique, bien connue de l'homme du métier, la température de transition vitreuse peut être mesurée par DSC (« Differential Scanning Calorimetry » en anglais ou « calorimétrie différentielle à balayage » en français).

Par copolymère comprenant au moins un monomère (meth)acrylate ou (meth)acrylique, on entend un polymère formé à partir d'au moins deux monomères, dont un monomère (meth)acrylate ou (meth)acrylique.

Par mélange de polymères comprenant au moins un monomère (meth)acrylate ou (meth)acrylique, on entend un mélange comprenant au moins deux polymères dont un polymère au moins est formé à partir de monomères (meth)acrylate ou (meth)acrylique.

Selon un mode de réalisation, le monomère (meth)acrylate ou (meth)acrylique est choisi parmi l'acide acrylique, l'acide méthacrylique, l'acrylate de méthyle, le méthacrylate de méthyle, l'acrylate d'éthyle, le méthacrylate d'éthyle, l'acrylate de butyle, le méthacrylate de butyle, l'acrylate d'isobutyle, le méthacrylate d'isobutyle, l'acrylate de n-hexyle, le méthacrylate de n-hexyle, l'acrylate d'éthylhexyle, le méthacylate d'éthylhexyle, l'acrylate de n-heptyle, le méthacrylate de n-heptyle, l'acrylate de stéaryle, le méthacrylate de stéaryle, le méthacrylate de glycidyle, l'acrylamide, le méthacrylamide, l'acrylate d'hydroxyéthyle, le méthacrylate d'hydroxyéthyle, le méthacrylate d'allyle, l'acrylate de cyclohexyle, le méthacrylate de cyclohexyle, le 2-éthoxyéthyle-acrylate, le 2-éthoxyéthyle-méthacrylate, l'acrylate d'isodécyle, le méthacrylate d'isodécyle, le 2-méthoxy acrylate, le 2-éthoxy-méthacrylate, le 2-(2-éthoxyéthoxy)-éthylacrylate, l'acrylate de 2-phénoxyéthyle, le méthacrylate de 2-phénoxyéthyle, l'acrylate d'isobornyle, le méthacrylate d'isobornyle, l'acrylate de caprolactone, le méthacrylate de caprolactone, le monoacrylate de polypropylène glycol, le monométhacrylate de polypropylène glycol, l'acrylate de polyéthylène glycol, le méthacrylate de polyéthylène glycol, l'acrylate de benzyle, le méthacrylate de benzyle.

Selon un mode de réalisation particulier de l'invention, la composition polymérique ayant une température de transition vitreuse allant de -50°C à 0°C comprend au moins un copolymère ou un mélange d'au moins deux polymères comprenant au moins un monomère (meth)acrylate ou (meth)acrylique.

Selon un mode de réalisation particulier de l'invention, la composition polymérique ayant une température de transition vitreuse allant de -50°C à 0°C consiste essentiellement en un ou plusieurs copolymères ou un mélange d'au moins deux polymères comprenant au moins un monomère (meth)acrylate ou (meth)acrylique.

Selon un mode de réalisation, le copolymère ou le mélange de polymères comprenant au moins un monomère (meth)acrylate ou (meth)acrylique comprend un ou plusieurs autres monomères choisis parmi l'acétate de vinyle, l'éthylène, le styrène, le chlorure de vinyle, le versatate de vinyle et le laurate de vinyle.

Selon un mode de réalisation, le copolymère comprenant au moins un monomère (meth)acrylate ou (meth)acrylique est un terpolymère d'acétate de vinyle, d'éthylène et d'acrylate.

Selon un mode de réalisation de l'invention, la composition polymérique ayant une température de transition vitreuse allant de -50°C à 0°C comprend au moins un mélange d'au moins deux polymères comprenant au moins un polyester et au moins un polyuréthane.

De préférence, la composition polymérique consiste essentiellement en un mélange de polyesters et de polyuréthanes.

Selon un mode de réalisation, les polyuréthanes sont obtenus à partir d'au moins un polyol et d'au moins un polyisocyanates.

Avantageusement, les polyols sont choisis parmi l'éthylène glycol, le 1,2-propylène glycol, le 1,3-propylène glycol, le 1,4-butanediol, le 1,3-butanediol, le 1,4-butènediol, le 1,4-butynediol, le 1,5-pentanediol, le 1,6-hexanediol, le 1,8-octanediol, le néopentylglycol, le cyclohexanediméthanol, le 2-méthyl-1,3-propanediol, le 1,5-pentanediol, le diéthylène glycol, le triéthylène glycol, le tétraéthylène glycol, le polyéthylène glycol, le dipropylène glycol, le polypropylène glycol, le dibutylène glycol et le polybutylène glycol.

De préférence, les polyisocyanates sont choisis parmi les diisocyanates linéaires ou ramifiés comprenant une chaîne alkylène de 4 à 14 atomes de carbone, les diisocyanates cycloaliphatiques comprenant de 6 à 12 atomes de carbone, les diisocyanates aromatiques comprenant de 8 à 14 atomes de carbone, les polyisocyanates comprenant des isocyanurates, des diisocyanates uretdione, les diisocyanates comprenant des biurets, les polyisocyanates comprenant des groupements uréthanes et/ou allophanates, des polyisocyanates comprenant des groupements oxadiazinetrione, les polyisocyanates modifiée urétonimine, ou leurs mélanges.

Selon un mode de réalisation, les diisocyanates sont choisis parmi le tétraméthylène diisocyanate, l'hexaméthylène diisocyanate, l'octaméthylène diisocyanate, le décaméthylène diisocyanate, le dodécaméthylène diisocyanate, le tétradécaméthylène diisocyanate, le diisocyanate de triméthylhexane, le diisocyanate de tétraméthylhexane, le 1,4-diisocyanatocyclohexane, le 1,3-diisocyanatocyclohexane, le 1,2-diisocyanatocyclohexane, le 4,4'-di(isocyanatocyclohexyl)méthane, le 1,4-diisocyanatocyclohexene, le 1,3-diisocyanatocyclohexene, le 1,2-diisocyanatocyclohexene, l'isophorone diisocyanate (IPDI), le 2,4-diisocyanato-1-méthylcyclohexane, le 2,6-diisocyanato-1-méthylcyclohexane, le 2,4-diisocyanatotoluène, le 2,6-diisocyanatotoluène, le tétraméthylxylylène diisocyanate, le 1,4-diisocyanatobenzène, le 4,4'-diisocyanatodiphénylméthane, le 2,4-diisocyanatodiphénylméthane, le p-xylylène diisocyanate et l'isopropényldiméthyltolylène diisocyanate.

Selon un mode de réalisation, les polyesters sont choisis parmi les polyesters de polyol. De préférence, les polyesters sont obtenus à partir d'acides polycarboxyliques et/ou d'anhydrides polycarboxyliques et/ou de polycarboxylates et de polyols.

Les acides polycarboxyliques peuvent être aliphatiques, cycloaliphatiques, aromatiques ou hétérocycliques, ils peuvent être non substitués ou substitués, par exemple par un halogène, et ils peuvent être saturés ou insaturés.

Selon un mode de réalisation, les acides polycarboxyliques, les anhydrides polycarboxyliques sont choisis parmi l'acide succinique, l'acide adipique, l'acide subérique, l'acide azélaîque, l'acide sébacique, l'acide phtalique, l'acide isophtalique, l'anhydride phtalique, l'anhydride tétrahydrophtalique, l'anhydride hexahydrophtalique, l'anhydride tétrachlorophtalique, l'anhydride endométhylènetétrahydrophtalique, l'anhydride glutarique, l'acide maléïque, l'anhydride maléïque, l'acide fumarique.

Parmi les polyols qui peuvent être utilisés pour la fabrication du polyester, on peut citer l'éthylène glycol, le 1,2-propylène glycol, le 1,3-propylène glycol, le 1,4-butanediol, le 1,3-butanediol, le 1,4-butènediol, le 1,4-butynediol, le 1,5-pentanediol, le 1,6-hexanediol, le 1,8-octanediol, le néopentylglycol, le cyclohexanediméthanol, le 2-méthyl-1,3-propanediol, le 1,5-pentanediol, le diéthylène glycol, le triéthylène glycol, le tétraéthylène glycol, le polyéthylène glycol, le dipropylène glycol, le polypropylène glycol, le dibutylène glycol et le polybutylène glycol.

Selon un mode de réalisation de l'invention, la composition polymérique ayant une température de transition vitreuse allant de -50°C à 0°C comprend au moins un copolymère d'acétate de vinyle et d'éthylène.

Selon un mode de réalisation de l'invention, la composition polymérique ayant une température de transition vitreuse allant de -50°C à 0°C comprend un mélange :
- d'au moins un copolymère ou un mélange d'au moins deux polymères comprenant au moins un monomère (méth)acrylate ou (méth)acrylique tels que définis ci-dessus, et
- d'au moins un mélange d'au moins deux polymères comprenant au moins un polyester et au moins un polyuréthane tels que définis ci-dessus.

Selon un mode de réalisation de l'invention, la composition polymérique ayant une température de transition vitreuse allant de -50°C à 0°C consiste essentiellement en un mélange :
- d'un ou plusieurs copolymères ou un mélange d'au moins deux polymères comprenant au moins un monomère (méth)acrylate ou (méth)acrylique tels que définis ci-dessus, et
- un mélange d'au moins un polyester et au moins un polyuréthane tels que définis ci-dessus.

Selon un mode de réalisation de l'invention, les charges ont une densité apparente allant de 1,30 à 1,70, de préférence de 1,40 à 1,60.

De préférence, la charge a une granulométrie allant de 10 à 400 µm.

L'homme du métier peut ajuster les proportions et le choix des monomères afin d'obtenir un copolymère ou un mélange de polymères ayant la température de transition vitreuse désirée.

Les émulsions de (co)polymère(s) qui peuvent être utilisées pour la préparation de la composition de colle de l'invention sont disponibles commercialement. On peut citer les produits suivants:
- PLEXTOL® D 306 (disponible auprès de Synthomer) : dispersion aqueuse de résine acrylique pure à base de n-butylacrylate (98%) et de styrène (2%) ayant une température de transition vitreuse de -30°C,
- VINNAPAS® EAF 68 (disponible auprès de Wacker) : dispersion aqueuse de résine acrylique à base d'acétate de vinyle, d'éthylène et d'acrylate ayant une température de transition vitreuse de -35°C,
- ACRONAL® A 380 (disponible auprès de BASF) : dispersion aqueuse de résine acrylique à base d'acrylate(s) et d'acrylonitrile ayant une température de transition vitreuse de -22°C,
- LUPHEN® D DS 3548 (disponible auprès de BASF) : dispersion d'une résine à base d'ester et d'uréthane ayant une température de transition vitreuse de -46°C,
- VINNAPAS® EP 8010 : Dispersion aqueuse de résine à base d'acétate de vinyle (83%) et d'éthylène (17%) ayant une température de transition vitreuse de -10°C.

Selon un mode de réalisation de l'invention, la composition de colle pelable comprend en outre des fibres, telles que des fibres de cellulose, des fibres de verre, des fibres de caoutchouc, des fibres naturelles, telles que coton, viscose, jute, sisal ou des fibres synthétiques, telles que polyamide, polyester, polyacrylonitrile, polypropylène polyéthylène. De préférence, les fibres représentent de 0,01 à 2% en poids par rapport au poids de la composition de colle pelable.

Les fibres permettent, après séchage de la composition, d'augmenter la cohésion de la membrane (ou du film) ainsi obtenue.

Selon un mode de réalisation de l'invention, la composition de colle comprend en outre jusqu'à 10% en poids d'une résine tackifiante, de préférence choisie parmi les esters de colophane, les résines terpéniques, les résines terpène phénoliques et les dispersions à base de résine terpène phénolique.

La résine tackifiante permet d'améliorer le caractère piégeant de la colle. Cela permet de mieux maintenir les matériaux ensemble dès leur assemblage pour qu'ils ne glissent pas et ne se déplacent pas l'un par rapport à l'autre. Ainsi, le film de colle reste continu et immobile pendant la durée de prise et le collage ne s'ouvre pas.

Un autre objet de la présente invention est un procédé de fabrication de la colle pelable selon l'invention. La colle pelable est fabriquée par simple mélange des composants. De préférence, l'épaississant est ajouté en premier, suivi de la solution de soude, puis le copolymère ou le mélange de polymères est ajouté afin d'éviter les variations de pH trop importantes. Après fabrication, la composition de colle est stockée à l'abri de la lumière et de l'air à une température allant de 5°C à 40°C, de préférence de 10°C à 30°C.

Dans le cas où le copolymère ou le mélange de polymères est sous forme d'une poudre redispersable, le copolymère ou le mélange de polymères est intégré à la composition de colle par un ajout supplémentaire d'eau afin d'obtenir une solution aqueuse.

Un autre objet de la présente invention concerne une membrane obtenue par séchage de la composition de colle pelable selon l'invention.

En effet, la composition de colle pelable selon l'invention peut être appliquée sur un substrat, par exemple le sol, puis, après séchage de ladite composition de colle, celle-ci forme une membrane pelable.

Selon un mode de réalisation, la membrane pelable a une épaisseur supérieure ou égale à 100 µm, de préférence supérieure ou égale à 125 µm, plus particulièrement supérieure ou égale à 150 µm L'homme du métier sait adapter l'épaisseur maximale en fonction des conditions de mise en application. En effet, il est souhaitable de ne pas avoir une épaisseur trop importante pour un revêtement de surface collé sur un substrat. Plus particulièrement, l'épaisseur de la membrane (ou film) pelable peut être inférieure ou égale à 1 millimètre.

Selon un mode de réalisation de l'invention, la membrane pelable peut être obtenue par application de la composition de colle pelable selon l'invention sur une trame ou une bande d'armature non-tissée.

De préférence, la trame est sous la forme d'un grillage, d'un matériau tissé ou non-tissé.

Le matériau constituant la trame peut être un métal, des fibres naturelles ou synthétiques ou un plastique ou sous la forme d'une bande d'armature non-tissée.

On peut citer par exemple une trame en fibre de verre, en polyamide, une grille métallique, un matériau non-tissé obtenu par fusion de fibres enchevêtrées de polypropylène, un matériau tissé de polyester.

Selon un mode de réalisation, un revêtement est appliqué directement sur la membrane pelable. Dans ce cas, le substrat et le revêtement peuvent être décollés et présenter après décollage des surfaces intactes, c'est-à-dire sans résidu de colle après retrait du revêtement.

Dans le cas où une trame est utilisée, le retrait de la membrane de la surface du revêtement et de la surface du substrat est facilité.

Selon une variante de l'invention, on applique une colle classique sur une membrane sèche telle que décrite ci-dessus, pour ensuite appliquer un revêtement. Dans ce cas, lors du retrait du revêtement, le substrat est retrouvé intact, sans résidu de colle. Ce mode de réalisation permet en particulier de coller des revêtements nécessitant une colle forte. Parmi ces types de revêtement, on peut citer les revêtements ayant une variation dimensionnelle importante comme le caoutchouc ou les lames et les dalles de LVT (en anglais « Luxury Vinyl Tile » ou « dalle de vinyle haut de gamme » en français). Dans ce mode de réalisation, la membrane de colle peut comprendre ou non une trame telle que décrite ci-dessus.

Parmi les colles classiques, on peut citer les dispersions acryliques ou SBR (styrène-butadiène) ou une colle de type résine-alcool ou un adhésif liquide ou des colles sèches.

Un autre objet de la présente invention est l'association d'un revêtement de surface souple avec une composition de colle pelable selon l'invention.

En effet, il peut être judicieux d'associer au sein d'un kit destiné aux professionnels ou aux particuliers, un revêtement de surface souple et une composition de colle en quantités adaptées à la surface à revêtir.

Une trame peut également faire partie du kit.

Le kit peut en outre comprendre une colle classique.

Les revêtements de surface souples utilisés dans l'invention sont ceux qui remplissent les conditions édictées dans les normes DTU 53.1 et 53.2.

Notamment, les revêtements souples sont les moquettes tricotées, touffetées, tissées et floquées, en lés ou en dalles, notamment celles qui répondent aux exigences de la NF EN 1307, ainsi que les revêtements de sol aiguilletés en lés ou en dalles, notamment ceux qui répondent aux exigences de la NF EN 1470 et prEN 13297. On peut citer les moquettes classiques en laine ou en synthétique, et les revêtements en fibres naturelles.

Les revêtements souples peuvent aussi être des revêtements de sol en polymère, par exemple PVC ou autre. On peut citer les exemples suivants (voir la norme DTU 53.2) :
- Revêtements de sol homogènes et hétérogènes à base de polychlorure de vinyle
- Revêtements de sol à base de polychlorure de vinyle sur support de jute ou de polyester ou sur support de polyester avec envers en polychlorure de vinyle
- Revêtements de sol à base de polychlorure de vinyle sur mousse
- Revêtements de sol à base de polychlorure de vinyle avec support à base de liège
- Revêtements de sol à base de polychlorure de vinyle expansé
- Dalles semi flexibles à base de polychlorure de vinyle
- Dalles d'aggloméré de liège avec couche d'usure à base de polychlorure de vinyle
- Revêtements souples à base de polymères d'origine renouvelable (d'origine agricole notamment) tels que les polymères PLA (acide polylactique) ou polyoléfine

### (l'oléfine étant issue notamment de bio-éthanol)

On peut donc utiliser dans l'invention un grand nombre de revêtements différents, par exemples les revêtements suivants :
- P.V.C. homogènes (dalles ou lés)
- P.V.C multicouches (dalles ou lés)
- P.V.C sur liège
- Polyoléfines
- Linoléums en lés
- Caoutchoucs en dalles ou en lés
- Vinyles Expansés Reliefs (V.E.R.)
- Dalles semi-flexibles
- Aiguilletés avec ou sans envers
- Moquettes sur mousse (latex)
- Moquettes à envers non tissés
- Moquettes dossiers synthétiques (type Action Back)
- Coco, sisal et jonc de mer à envers latexés.

Un autre objet de l'invention concerne un procédé d'application d'un revêtement de surface souple sur un substrat comprenant les étapes suivantes :
a) application d'une couche de composition de colle pelable selon l'invention sur le substrat,
b) affichage du revêtement de surface souple sur le substrat.

Le substrat sur lequel s'applique le revêtement de l'invention est tout support traditionnel recevant ce type de revêtement. On peut citer par exemple les bétons surfacés (notamment avec un parement soigné), les chapes base ciment (incorporées ou rapportées), les chapes anhydrite, les anciens carrelages, anciens parquets convenablement lissés, les panneaux de particules ou les contreplaqués, les parements de murs classiques.

Selon un mode de réalisation de l'invention, la quantité de composition de colle pelable est supérieure ou égale à 200 g/m², de préférence supérieure ou égale à 250 g/m², de préférence encore supérieure ou égale à 300 g/m², plus particulièrement supérieure ou égale à 350 g/m².

L'application de la composition de colle pelable s'effectue de manière continue ou discontinue sur le substrat.

De préférence, la couche de colle est appliquée directement sur le substrat. Le substrat n'est en général pas primarisé avant application de la couche de colle. Par exemple un carrelage subit un simple décapage avant application de la couche de colle. Les substrats sont ceux cités dans la norme DTU 53.1.

De manière classique, le revêtement de surface souple est posé après l'observation d'un temps de gommage allant de 10 à 30 minutes. Le temps de gommage correspond à la période pendant laquelle la composition de colle appliquée s'épaissit et augmente son pouvoir d'adhérence.

De préférence, le procédé d'application de l'invention présente une étape supplémentaire c) de marouflage afin de faciliter le transfert de la colle au dos du revêtement souple. Cette étape permet notamment d'étaler la composition de colle afin de rendre la composition de colle appliquée continue ou quasi-continue sur le substrat.

L'utilisateur peut poser le revêtement souple dans un intervalle de temps défini par le temps de travail qui est de l'ordre de 30 minutes et qui peut être modulé par l'ajout d'additifs. Le temps de travail commence à courir à la fin du temps de gommage et se termine au moment où la colle a perdu son caractère adhésif.

Après séchage de la composition de colle, un film (aussi appelé membrane) de colle pelable est obtenu.

Selon un mode de réalisation, le film ou membrane de colle pelable présente une épaisseur supérieure ou égale à 100 µm, de préférence supérieure ou égale à 125 µm, plus particulièrement supérieure ou égale à 150 µm L'homme du métier sait adapter l'épaisseur maximale en fonction des conditions de mise en application. En effet, il est souhaitable de ne pas avoir une épaisseur trop importante pour un revêtement de surface collé sur un substrat. Plus particulièrement, l'épaisseur du film de colle pelable peut être inférieure ou égale à 1 millimètre.

L'invention s'applique de façon préférentielle pour les revêtements de sols, mais peut aussi s'appliquer sur les murs.

Selon un mode de réalisation particulier du procédé d'application d'un revêtement de surface souple selon l'invention, une trame est déposée sur le substrat avant l'étape a) d'application de la couche de composition de colle pelable.

De préférence, la trame est sous la forme d'un grillage, d'un matériau tissé ou non-tissé ou d'une bande d'armature non-tissée.

Le matériau constituant la trame peut être un métal, des fibres naturelles ou synthétiques ou un plastique.

On peut citer par exemple une trame en fibre de verre, en polyamide, une grille métallique, un matériau non-tissé obtenu par fusion de fibres enchevêtrées de polypropylène, un matériau tissé de polyester.

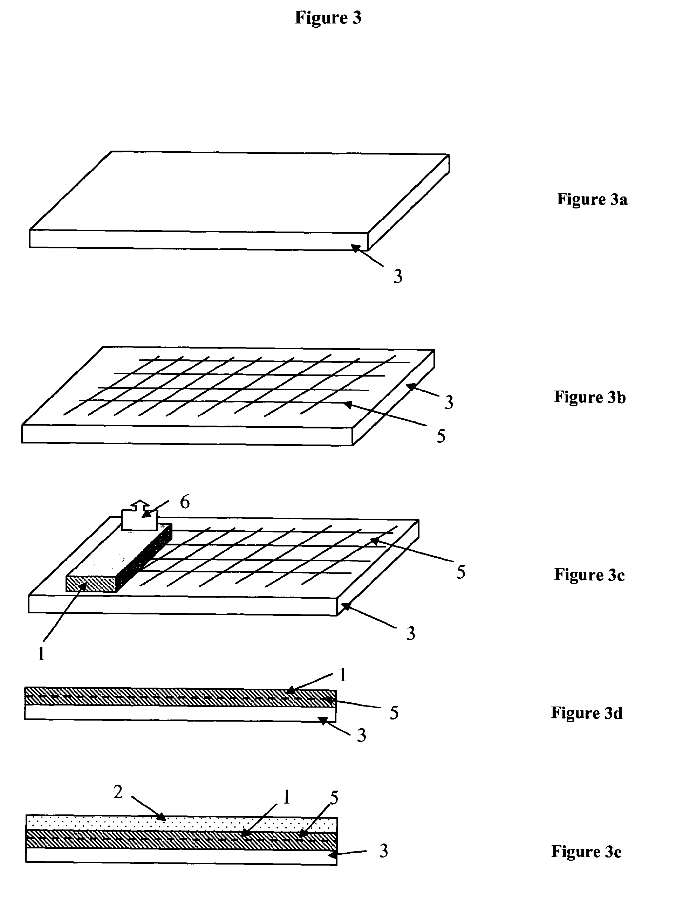

La figure 3 illustre un mode de réalisation particulier de l'invention. La figure 3a représente en perspective le substrat 3 initial. La figure 3b représente en perspective le substrat 3 sur lequel une trame 5 est déposée. La figure 3c représente en perspective le substrat 3 recouvert par la trame 5 sur lequel la composition de colle 1 est appliquée à l'aide d'un applicateur 6. La figure 3d représente en coupe le substrat 3 recouvert par la composition de colle 1. La trame 5 est alors imprégnée de la composition de colle 1. Puis, un revêtement souple 2 est appliqué sur la composition de colle 1 comprenant la trame 5, comme illustré sur la figure 3e.

Selon une variante du procédé selon l'invention, le procédé d'application d'un revêtement de surface souple comprend entre les étapes a) et b), les étapes supplémentaires suivantes :
Abis) séchage de la composition de colle pour obtenir une membrane,
Ater) application d'une colle classique sur la membrane obtenue à l'issue de
   l'étape Abis.

De préférence, l'application de la colle classique à l'étape Ater) s'effectue après un temps de séchage à l'étape Abis) compris entre 20 et 80 minutes,

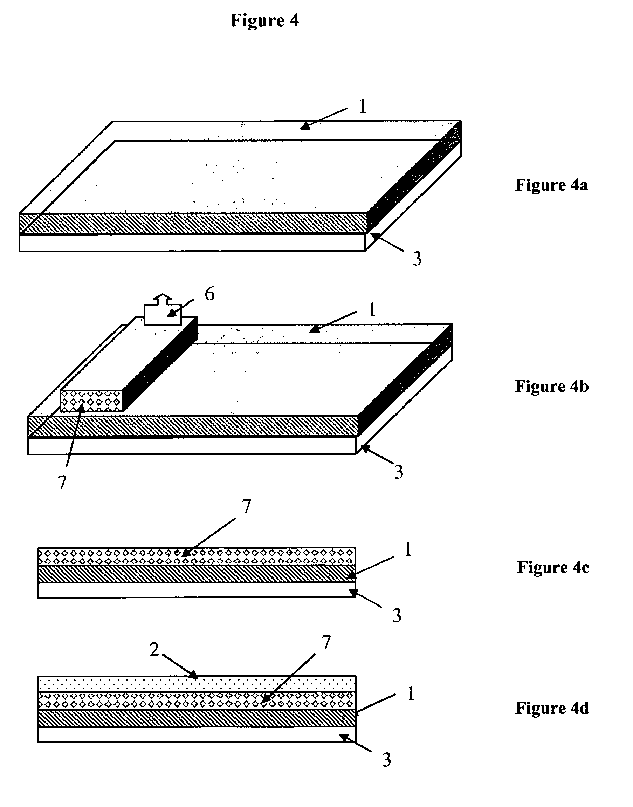

La figure 4 illustre un mode de réalisation de l'invention faisant intervenir une colle classique 7.

La figure 4a représente en perspective le substrat 3 revêtu d'une membrane de colle 1. La figure 4b représente en perspective le substrat 3 revêtu d'une membrane sèche de colle 1 sur laquelle une composition de colle classique 7 est appliquée à l'aide d'un applicateur 6. La figure 4c représente en coupe le substrat 3 recouvert d'une membrane de colle selon l'invention et d'une couche de composition de colle classique 7. Puis, un revêtement souple 2 est appliqué sur la composition de colle classique 7, comme illustré sur la figure 4d.

Selon une variante de l'invention, la membrane de colle 1 peut comprendre une trame, non représentée sur les figures 4a à 4d, telle que décrite ci-dessus.

Selon un mode de réalisation de l'invention, la colle classique est choisie parmi les dispersions acryliques ou SBR (styrène-butadiène) ou les colles de type résine-alcool ou les adhésifs liquides ou les colles sèches.

Un autre objet de la présente invention est un substrat revêtu du film pelable selon l'invention et du revêtement de surface souple.

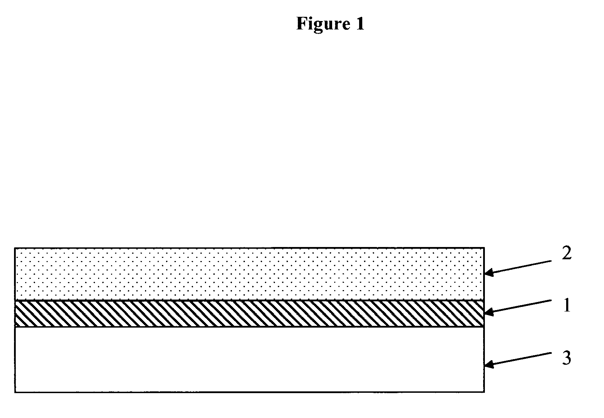

La figure 1 représente le revêtement souple 2 collé sur un substrat 3 au moyen de la colle pelable 1 selon l'invention.

Un autre objet de la présente invention est un procédé de rénovation d'un substrat comportant un revêtement de surface, ce procédé comprenant une étape d'arrachage d'un revêtement souple selon l'invention.

L'étape d'arrachage s'effectue en exerçant une force de pelage sur le revêtement pour que la couche constituée par le film de colle pelable à l'interface film pelable/substrat et film pelable/revêtement souple se retire aisément, laissant le substrat et le revêtement souple tels qu'ils étaient avant le collage.

Dans le cas où une colle classique est appliquée entre le revêtement et la membrane pelable selon l'invention, alors seul le substrat se retrouve tel qu'il était avant le collage, à l'issue de l'étape d'arrachage du revêtement souple.

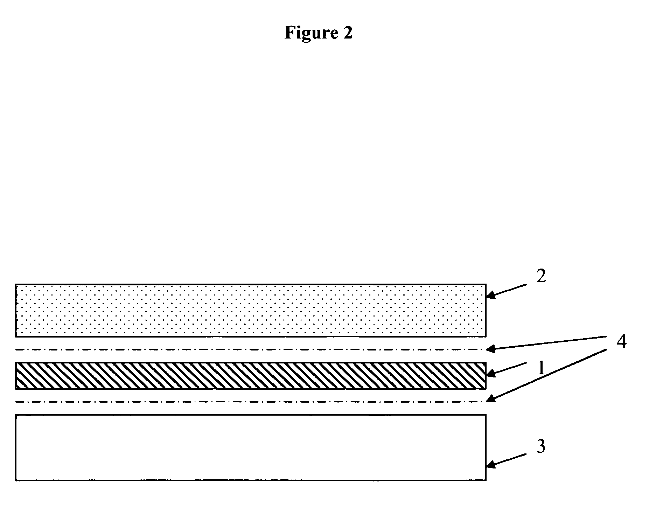

Le procédé de rénovation selon un mode de réalisation de l'invention permet d'obtenir un substrat et un revêtement souple tous deux dépourvus de résidus de colle (figure 2). La rupture, schématisée sur la figure 2 par les lignes 4, est adhésive.

Selon un mode de réalisation de l'invention, le procédé de rénovation comprend une étape supplémentaire de recyclage du revêtement souple.

Après arrachage du revêtement souple, le substrat peut immédiatement être recouvert d'un nouveau revêtement et le revêtement peut être recyclé.

### EXEMPLES

Différentes compositions de colle ont été préparées et les performances de ces compositions ont été testées.

Les compositions A, B, C, D et E sont des exemples comparatifs et ne font pas partie de l'invention.

Les compositions 1 à 15 sont des compositions de colle pelable selon l'invention.

Les copolymères suivants ont été utilisés :
- PLEXTOL® D306 : Dispersion aqueuse de résine acrylique pure à base de n-butylacrylate (98 %) et de styrène (2%) avec Tg = -30 °C,
- VINNAPAS® EAF 68 : Dispersion aqueuse de résine acrylique à base d'acétate de vinyle, d'éthylène et d'acrylate avec Tg = -35°C,
- ACRONAL® A380: Dispersion aqueuse de résine acrylique à base d'acrylate(s) et d'acrylonitrile avec Tg = -22°C,
- VINNAPAS® EP34 : Dispersion aqueuse de résine à base d'acétate de vinyle (87%) et d'éthylène (13%) avec Tg = 3°C,
- LUPHEN® D DS 3548 (disponible auprès de BASF) : dispersion d'une résine à base d'ester et d'uréthane ayant une température de transition vitreuse de -46°C,
- VINNAPAS® EP 8010 : Dispersion aqueuse de résine à base d'acétate de vinyle (83%) et d'éthylène (17%) avec Tg = -10°C.

La résine tackifiante qui a été utilisée pour la fabrication des compositions 10 et 11 est une résine tackifiante de type colophane modifiée estérifiée au triéthylène glycol disponible auprès de DRT sous le nom GRANOLITE® 150 N.

La densité apparente des charges a été mesurée selon le mode opératoire suivant :
- on place un godet d'une contenance d'environ V = 500 mL calibré (masse du godet Mo = 500 g) en position droite au dessous d'un entonnoir en acier inoxydable d'une contenance d'environ 600 mL ;
- on ferme le fond creux de l'entonnoir avec une glissière, la glissière permettant d'assurer l'ouverture et la fermeture du fond creux de l'entonnoir) ;
- on remplit complètement l'entonnoir avec la ou les charges, homogénéisées, et on enlève rapidement la glissière, laissant ainsi s'écouler la ou les charges dans le godet ;
- on arase lentement les charges superflues à l'aide d'une règle plate (un instrument équivalent peut convenir), et on nettoie soigneusement l'extérieur du godet avec un chiffon sec (un pinceau pouvant être utilisé),
- on pose le godet sur une balance analytique au 0.1 g et on pèse le godet et son contenu, masse M1, avec une précision au 0.1 g.

La densité apparente est alors calculée comme étant : d = (M1 - Mo)/V. Dans cette formule, M1 et Mo s'expriment en gramme, le volume s'exprime en cm³.

**Tableau 1 : Compositions**

| Composition (% en poids) | A | B | C | D | E | 1 | 2 | 3 | 4 | 5 | 6 | 7 | 8 | 9 |
|---|---|---|---|---|---|---|---|---|---|---|---|---|---|---|
| PLEXTOL® D306 (%poids sec) | 60 | - | - | - | - | - | - | - | - | - | - | - | - | 30 |
| VINNAPAS® EAF 68 (%poids sec) | - | - | - | 6 | 19,3 | 15 | 15 | 15 | 15 | 15 | 30 | 30 | - | - |
| ACRONAL® A380 (%poids sec) | - | - | - | - | - | - | - | - | - | - | - | - | 15 | - |
| VINNAPAS® EP34 (%poids sec) | - | - | 15 | - | - | - | - | - | - | - | - | - | - | - |
| Latex naturel (%poids humide) | - | 58,8 | 30 | 39 | 38,68 | 30,34 | 30 | 30 | 30 | 30 | 15 | 15 | 30 | 15 |
| eau | 40 | 39,2 | 30 | 30 | 38.64 | 30,22 | 30 | 30 | 30 | 30 | 30 | 30 | 30 | 30 |
| CaCO₃ 12 µm | - | - | - | - | - | 21,7 | - | 5,32 | 10,75 | 16,18 | - | - | - | - |
| CaCO₃ 350 µm | - | - | 21,5 | 21,5 | - | - | 21,5 | 16,18 | 10,75 | 5,32 | 21,5 | - | 21,5 | 21,5 |
| Sable SBLS 120 µm | - | - | - | - | - | - | - | - | - | - | - | 21,5 | - | - |
| densité apparente des charges | - | - | 1,7 | 1,7 | - | 1,3 | 1,7 | 1,6 | 1,5 | 1,4 | 1,7 | 1,35 | 1,7 | 1,7 |
| épaississant : solution aqueuse de polyacrylate de sodium | - | 2 | 1,37 | 1,37 | 1,6 | 1,13 | 1,37 | 1,37 | 1,37 | 1,37 | 1,37 | 1,37 | 1,37 | 1,37 |
| biocide | - | - | 0,15 | 0,15 | 0,15 | 0,15 | 0,15 | 0,15 | 0,15 | 0,15 | 0,15 | 0,15 | 0,15 | 0,15 |
| Anti-mousse | - | - | 0,2 | 0,2 | 0,2 | 0,2 | 0,2 | 0,2 | 0,2 | 0,2 | 0,2 | 0,2 | 0,2 | 0,2 |
| Stabilisant du latex | - | - | 1,16 | 1,16 | 1,16 | 1,16 | 1,16 | 1,16 | 1,16 | 1,16 | 1,16 | 1,16 | 1,16 | 1,16 |
| Masquant d'odeur | - | - | 0,1 | 0,1 | 0,1 | 0,1 | 0,1 | 0,1 | 0,1 | 0,1 | 0,1 | 0,1 | 0,1 | 0,1 |
| Ajusteur de pH | - | - | 0,17 | 0,17 | 0,17 | - | 0,17 | 0,17 | 0,17 | 0,17 | 0,17 | 0,17 | 0,17 | 0,17 |
| Anti-oxydant | - | - | 0,35 | 0,35 | - | - | 0,35 | 0,35 | 0,35 | 0,35 | 0,35 | 0,35 | 0,35 | 0,35 |

**Tableau 1bis : Compositions 10 to 15**

| Composition (% en poids) | 10 | 11 | 12 | 13 | 14 | 15 |
|---|---|---|---|---|---|---|
| VINNAPAS® EAF 68 (%poids sec) | 11 | 12,5 | 9 | 4 | | |
| LUPHEN® D DS 3548 (%poids sec) | | | 5 | 10 | 14 | |
| VINNAPAS® EP 8010 (%poids sec) | | | | | | 15 |
| Latex naturel (%poids humide) | 29 | 30 | 30 | 30 | 30 | 30 |
| eau | 26 | 27,5 | 30 | 30 | 30 | 30 |
| CaCO₃ 350 µm | 21 | 21,15 | 20,85 | 20,85 | 20,85 | 21,5 |
| Granolite® 150 N | 7,65 | 3,65 | | | | |
| densité apparente des charges | 1,7 | 1,7 | 1,7 | 1,7 | 1,7 | 1,7 |
| épaississant : solution aqueuse de polyacrylate de sodium | 1,02 | 1,37 | 1,37 | 1,37 | 1,6 | 1,37 |
| biocide | 0,15 | 0,15 | 0,15 | 0,15 | 0,15 | 0,15 |
| Anti-mousse | 0,2 | 0,2 | 0,2 | 0,2 | 0,2 | 0,2 |
| Stabilisant du latex | 1,66 | 0,16 | 1,16 | 1,16 | 1,66 | 1,16 |
| Masquant d'odeur | 0,1 | 0,1 | 0,1 | 0,1 | 0,1 | 0,1 |
| Ajusteur de pH | 0,17 | 0,17 | 0,17 | 0,17 | 0,17 | 0,17 |
| Anti-oxydant | 0,35 | 0,35 | 0,35 | 0,35 | - | 0,35 |

### Efficacité du collage et du détachement

Les efficacités du collage et du détachement ont été évaluées en appliquant une couche de colle pelable avec un grammage de 360 g/m².

L'efficacité du collage et du détachement est évaluée sur substrat de type enduit de lissage avec un revêtement en polychlorure de vinyle (PVC), 7 jours après la pose, le revêtement est retiré manuellement et on évalue qualitativement la force qu'il faut pour détacher le revêtement et la facilité de détachement du film de colle.

Les résultats sont indiqués dans les tableaux 2 et 2bis.

**Tableau 2 : Efficacité du collage et du détachement**

| | A | B | C | D | 1 | 2 | 3 | 4 | 5 | 6 |
|---|---|---|---|---|---|---|---|---|---|---|
| Efficacité du collage | bon | ne colle pas | excellent | ne colle pas | bon | bon | bon | bon | bon | excellent |
| Efficacité du détachement | non détachable | très bon | non détachable | excellent | bon | excellent | bon | bon | bon | moyen |

**Tableau 2bis : Efficacité du collage et du détachement**

| | 7 | 8 | 9 | 10 | 11 | 12 | 13 | 14 | 15 |
|---|---|---|---|---|---|---|---|---|---|
| Efficacité du collage | moyen | excellent | moyen | bon | bon | bon | bon | excellent | bon |
| Efficacité du détachement | bon | moyen | moyen | bon | excellent | excellent | bon | moyen | bon |

Les compositions comparatives A, B, C et D ne présentent pas conjointement des capacités de collage et de détachement.

Les compositions 1 à 15 selon l'invention présentent conjointement des capacités de collage et de détachement.

### Force de pelage

On mesure la force de pelage nécessaire à l'amorçage du retrait du revêtement PVC lié par la couche de colle pelable à un substrat constitué d'une plaque de fibre-ciment. On applique la norme NF EN 1372 (pelage à 90°), avec une éprouvette de 250x50 mm, une vitesse de pelage de 100 mm/min, et un conditionnement 7 jours à 23°C/50% HR.

La force de pelage permet de déterminer quantitativement l'efficacité du collage.

Les résultats sont présentés dans les tableaux 3 et 3bis.

### Résistance au cisaillement d'un revêtement collé

On détermine maintenant la résistance au cisaillement d'un revêtement collé sur plaque de fibre-ciment. On procède suivant la norme NF EN 1373 (une éprouvette de 60x50 mm, une vitesse de traction de 20 mm/min, et un conditionnement 7 jours à 23°C/50% HR), avec une application de 360 g/m² de colle pelable. On utilise un PVC homogène Taraflex surface.

La résistance au cisaillement d'un revêtement collé permet de déterminer quantitativement l'efficacité du collage.

Les résultats sont présentés dans les tableaux 3 et 3bis.

**Tableau 3 : Force de pelage et résistance au cisaillement des compositions**

| | C | D | 1 | 2 | 3 | 4 | 5 | 6 |
|---|---|---|---|---|---|---|---|---|
| Force de pelage (N/mm) | 1,12 | 0,31 | 1 | 0,99 | 0,99 | 0,96 | 1,01 | 1,76 |
| Résistance au cisaillement (N/mm²) | 0,28 | 0,25 | 0,41 | 0,34 | 0,34 | 0,43 | 0,4 | 0,35 |

**Tableau 3bis : Force de pelage et résistance au cisaillement des compositions**

| | 7 | 8 | 9 | 10 | 11 | 12 | 13 | 14 | 15 |
|---|---|---|---|---|---|---|---|---|---|
| Force de pelage (N/mm) | 0,67 | 1,41 | 0,67 | 0,88 | 0,83 | 0,81 | 0,92 | 1,02 | 0,76 |
| Résistance au cisaillement (N/mm²) | 0,39 | 0,37 | 0,33 | 0,34 | 0,31 | 0,35 | 0,43 | 0,54 | 0,31 |

### Caractérisation de la colle

On mesure les caractéristiques de la colle. On applique la norme NF ISO 37. La longueur de l'échantillon est de 70 mm et la largeur de 6 mm, le film a une épaisseur allant de 0,5 mm à 0,7 mm, la vitesse de traction est de 50 mm/min.

Les résultats sont présentés dans les tableaux 4 et 4bis où Rm représente la contrainte à la rupture et le module est le module élastique.

**Tableau 4 : Caractérisation de la colle**

| | C | D | 2 | 3 | 4 | 5 | 6 |
|---|---|---|---|---|---|---|---|
| Rm (N/mm) | 0,68 | 0,39 | 1,03 | 0,7 | 0,88 | 0,85 | 0,29 |
| allongement à la rupture (%) | 900 | 1050 | 2500 | 2100 | 2250 | 2200 | 1750 |
| module (N/mm²) | 0,83 | 0,42 | 0,4 | 0,2 | 0,25 | 0,28 | 0,3 |

**Tableau 4bis : Caractérisation de la colle**

| | 7 | 8 | 9 | 10 | 11 | 12 | 13 | 14 | 15 |
|---|---|---|---|---|---|---|---|---|---|
| Rm (N/mm) | 0,92 | 0,78 | 0,59 | 0,71 | 0,79 | 0,83 | 1,12 | 3,42 | 0,76 |
| allongement à la rupture (%) | 2260 | 1950 | 1605 | 2250 | 2200 | 2250 | 2280 | 1800 | 2060 |
| Module (N/mm²) | 0,33 | 0,46 | 0,19 | 0,3 | 0,33 | 0,43 | 0,52 | 2,97 | 0,31 |

### Effet de l'épaisseur du film sec et de la charge

**Tableau 5 : Effet de l'épaisseur du film sec et de la charge**

| | E | 2 | 4 |
|---|---|---|---|
| CaCO₃ 12 µm | 0 | 0 | 10,75% |
| CaCO₃ 350 µm | 0 | 21,5% | 10,75% |
| Epaisseur du film sec | 50 µm | 226 µm | 173 µm |
| Efficacité du pelage | moyen | excellent | bon |

Le tableau 5 montre l'effet de l'épaisseur du film sec sur l'efficacité du pelage. En effet, une plus forte épaisseur permet d'améliorer l'efficacité du pelage (exemples 2 et 4).

Le tableau 5 montre également l'effet des charges sur l'efficacité du pelage. En effet, les charges permettent d'augmenter l'épaisseur du film sec et donc l'efficacité du pelage (exemple E comparé aux exemples 2 et 4).

## Revendications

1. Composition de colle comprenant :
a) de 10% à 40% en poids d'au moins un latex naturel,
b) de 10% à 40% en poids de matière sèche par rapport au poids total de la composition de colle, d'au moins une composition polymérique ayant une température de transition vitreuse allant de -50°C à 0°C, ladite composition polymérique comprenant :
i) au moins un copolymère ou un mélange d'au moins deux polymères comprenant au moins un monomère (méth)acrylate ou (méth)acrylique, et/ou
ii) au moins un mélange d'au moins deux polymères comprenant au moins un polyester et au moins un polyuréthane, et/ou
iii) au moins un copolymère d'acétate de vinyle et d'éthylène,
c) de 10% à 40% en poids par rapport au poids total de la composition de colle d'au moins une charge ayant une densité apparente allant de 1,30 à 1,70.

2. Composition de colle selon la revendication précédente, dans laquelle
a) le latex naturel représente de 15% à 35%, de préférence de 20% à 30% en poids du poids total de la composition de colle, et/ou
b) la composition polymérique représente de 10% à 25%, de préférence de 12% à 20% en poids de matière sèche par rapport au poids total de la composition de colle, et/ou
c) la ou les charges représentent de 15% à 35%, de préférence de 20% à 30% en poids du poids total de la composition.

3. Composition de colle selon l'une des revendications précédentes, comprenant en outre jusqu'à 10% en poids d'une résine tackifiante, de préférence choisie parmi les esters de colophane, les résines terpéniques, les résines terpène phénoliques et les dispersions à base de résine terpène phénolique.

4. Composition de colle selon l'une des revendications précédentes, dans laquelle la composition polymérique présente une température de transition vitreuse allant de - 40°C à -10°C, de préférence allant de -37°C à -15°C.

5. Composition de colle selon l'une des revendications précédentes, dans laquelle le copolymère est un terpolymère d'acétate de vinyle, d'éthylène et d'acrylate.

6. Composition de colle selon l'une des revendications 1 à 4, dans laquelle la composition polymérique comprend un terpolymère d'acétate de vinyle, d'éthylène et d'acrylate et un mélange de polyester et de polyuréthane.

7. Composition de colle selon l'une des revendications précédentes, comprenant en outre des fibres, de préférence des fibres de cellulose, des fibres de verre, des fibres de caoutchouc, des fibres naturelles, telles que coton, viscose, jute, sisal, ou des fibres synthétiques, telles que polyamide, polyester, polyacrylonitrile, polypropylène, polyéthylène.

8. Procédé d'application d'un revêtement de surface souple sur un substrat comprenant les étapes suivantes :
a) application d'une couche de composition de colle selon l'une des revendications 1 à 7 sur le substrat,
b) affichage du revêtement souple sur le substrat.

9. Procédé d'application d'un revêtement de surface selon la revendication précédente, dans lequel la quantité de composition de colle appliquée est supérieure ou égale à 200 g/m², de préférence supérieure ou égale à 250 g/m², de préférence encore supérieure ou égale à 300 g/m², plus particulièrement supérieure ou égale à 350 g/m².

10. Procédé d'application d'un revêtement de surface selon la revendication 8 ou 9, comprenant avant l'étape a), une étape d'application d'une trame ou d'une bande d'armature non-tissée sur le substrat.

11. Procédé d'application d'un revêtement de surface selon la revendication 10, dans lequel la trame est choisie parmi un grillage, un matériau tissé ou non-tissé.

12. Procédé d'application d'un revêtement de surface selon l'une des revendications 8 à 11, comprenant entre les étapes a) et b), une étape supplémentaire de séchage de la composition de colle de façon à obtenir une membrane, suivie de l'application d'une composition de colle différente de celle selon l'une des revendications 1 à 7 sur la membrane.

13. Procédé d'application d'un revêtement de surface selon l'une des revendications 8 à 12, comprenant une étape ultérieure de marouflage du revêtement de surface souple.

14. Procédé de rénovation d'un substrat revêtu d'un film de colle pelable, obtenu après séchage d'une composition de colle selon l'une des revendications 1 à 7, et d'un revêtement de surface souple, ledit procédé comprenant une étape d'arrachage du revêtement de surface souple.

## Patentansprüche

1. Klebstoffzusammensetzung, umfassend:
a) 10 bis 40 Gew.-% mindestens eines natürlichen Latex,
b) 10 bis 40 Gew.-% Trockensubstanz, bezogen auf das Gesamtgewicht der Klebstoffzusammensetzung, mindestens einer Polymerzusammensetzung mit einer Glasübergangstemperatur im Bereich von -50°C bis 0°C, wobei die Polymerzusammensetzung
i) mindestens ein Copolymer oder ein Gemisch von mindestens zwei Polymeren, umfassend mindestens ein (Meth)acrylat- oder (Meth)acrylmonomer, und/oder
ii) mindestens eine Mischung von mindestens zwei Polymeren, umfassend mindestens einen Polyester und mindestens ein Polyurethan, und/oder
iii) mindestens ein Copolymer von Vinylacetat und Ethylen
umfasst,
c) 10 bis 40 Gew.-%, bezogen auf das Gesamtgewicht der Klebstoffzusammensetzung, mindestens eines Füllstoffs mit einer scheinbaren Dichte im Bereich von 1,30 bis 1,70.

2. Klebstoffzusammensetzung nach dem vorhergehenden Anspruch, wobei
a) der natürliche Latex 15 bis 35 Gew.-% und vorzugsweise 20 bis 30 Gew.-% des Gesamtgewichts der Klebstoffzusammensetzung ausmacht und/oder
b) die Polymerzusammensetzung 10 bis 25 Gew.-% und vorzugsweise 12 bis 20 Gew.-% Trockensubstanz, bezogen auf das Gesamtgewicht der Klebstoffzusammensetzung, ausmacht und/oder
c) der bzw. die Füllstoffe 15 bis 35 Gew.-% und vorzugsweise 20 bis 30 Gew.-% des Gesamtgewichts der Zusammensetzung ausmachen.

3. Klebstoffzusammensetzung nach einem der vorhergehenden Ansprüche, ferner umfassend bis zu 10 Gew.-% eines klebrigmachenden Harzes, das vorzugsweise aus Kolophoniumestern, Terpenharzen, Terpenphenolharzen und Dispersionen auf Basis von Terpenphenolharz ausgewählt ist.

4. Klebstoffzusammensetzung nach einem der vorhergehenden Ansprüche, wobei die Polymerzusammensetzung eine Glasübergangstemperatur im Bereich von -40°C bis -10°C und vorzugsweise im Bereich von -37°C bis -15°C aufweist.

5. Klebstoffzusammensetzung nach einem der vorhergehenden Ansprüche, wobei es sich bei dem Copolymer um ein Terpolymer von Vinylacetat, Ethylen und Acrylat handelt.

6. Klebstoffzusammensetzung nach einem der Ansprüche 1 bis 4, wobei die Polymerzusammensetzung ein Terpolymer von Vinylacetat, Ethylen und Acrylat und eine Mischung von Polyester und Polyurethan umfasst.

7. Klebstoffzusammensetzung nach einem der vorhergehenden Ansprüche, ferner umfassend Fasern, vorzugsweise Cellulosefasern, Glasfasern, Kautschukfasern, Naturfasern, wie Baumwolle, Viskose, Jute, Sisal, oder Kunstfasern, wie Polyamid, Polyester, Polyacrylnitril, Polypropylen, Polyethylen.

8. Verfahren zum Aufbringen einer flexiblen Oberflächenbeschichtung auf ein Substrat, das folgende Schritte umfasst:
a) Aufbringen einer Schicht der Klebstoffzusammensetzung nach einem der Ansprüche 1 bis 7 auf das Substrat,
b) Anbringen der flexiblen Beschichtung auf dem Substrat.

9. Verfahren zum Aufbringen einer Oberflächenbeschichtung nach dem vorhergehenden Anspruch, bei dem die aufgebrachte Menge an Klebstoffzusammensetzung größer gleich 200 g/m², vorzugsweise größer gleich 250 g/m², noch weiter bevorzugt größer gleich 300 g/m² und weiter bevorzugt größer gleich 350 g/m² ist.

10. Verfahren zum Aufbringen einer Oberflächenbeschichtung nach Anspruch 8 oder 9, umfassend vor Schritt a) einen Schritt des Aufbringens eines Schusses oder eines Vliesstoff-Verstärkungsstreifens auf das Substrat.

11. Verfahren zum Aufbringen einer Oberflächenbeschichtung nach Anspruch 10, bei dem der Schuss aus einem Gitter, einem Webstoff oder einem Vliesstoff ausgewählt wird.

12. Verfahren zum Aufbringen einer Oberflächenbeschichtung nach einem der Ansprüche 8 bis 11, umfassend zwischen den Schritten a) und b) einen zusätzlichen Schritt des Trocknens der Klebstoffzusammensetzung zum Erhalt einer Membran und des anschließenden Aufbringens einer Klebstoffzusammensetzung, die von derjenigen nach einem der Ansprüche 1 bis 7 verschieden ist, auf die Membran.

13. Verfahren zum Aufbringen einer Oberflächenbeschichtung nach einem der Ansprüche 8 bis 12, umfassend einen nachfolgenden Schritt des Aufleimens der flexiblen Oberflächenbeschichtung.

14. Verfahren zur Renovierung eines mit einem nach Trocknen einer Klebstoffzusammensetzung nach einem der Ansprüche 1 bis 7 erhaltenen abziehbaren Klebstofffilm und einer flexiblen Oberflächenbeschichtung beschichteten Substrats, wobei das Verfahren einen Schritt des Abziehens der flexiblen Oberflächenbeschichtung umfasst.

## Claims

1. An adhesive composition comprising:
a) from 10% to 40% by weight of at least one natural latex,
b) from 10% to 40% by weight of dry material based on the total weight of the adhesive composition, of at least one polymeric composition having a glass transition temperature ranging from -50°C to 0°C, said polymeric composition comprising:
i) at least one copolymer or one mixture of at least two polymers comprising at least one (meth)acrylate or (meth)acrylic monomer, and/or
ii) at least one mixture of at least two polymers comprising at least one polyester and at least one polyurethane, and/or
iii) at least one copolymer of vinyl acetate and of ethylene,
c) from 10% to 40% by weight based on the total weight of the adhesive composition, of at least one filler having an apparent density ranging from 1.30 to 1.70.

2. The adhesive composition according to the preceding claim, wherein
a) the natural latex represents from 15% to 35%, preferably from 20% to 30% by weight of the total weight of the adhesive composition and/or
b) the polymeric composition represents from 10% to 25%, preferably from 12% to 20% by weight of dry material based on the total weight of the adhesive composition, and/or
c) the filler (s) represent (s) from 15% to 35%, preferably from 20% to 30% by weight of the total weight of the composition.

3. The adhesive composition according to either of the preceding claims, further comprising up to 10% by weight of a tackifying resin, preferably selected from rosin esters, terpene resins, terpene phenol resins and dispersions based on terpene phenol resin.

4. The adhesive composition according to one of the preceding claims, wherein the polymeric composition has a glass transition temperature ranging from -40°C to -10°C, preferably ranging from -37°C to -15°C.

5. The adhesive composition according to one of the preceding claims, wherein the copolymer is a terpolymer of vinyl acetate, of ethylene and of acrylate.

6. The adhesive composition according to one of claims 1 to 4, wherein the polymeric composition comprises a terpolymer of vinyl acetate, of ethylene and of acrylate and a mixture of polyester and polyurethane.

7. The adhesive composition according to one of the preceding claims, further comprising fibers, preferably cellulose fibers, glass fibers, rubber fibers, natural fibers such as cotton, viscose, jute, sisal or synthetic fibers such as polyamide, polyester, polyacrylonitrile, polypropylene, polyethylene fibers.

8. A method for applying a flexible surface coating on a substrate comprising the following steps:
a) applying an adhesive composition layer according to one of claims 1 to 7 on the substrate,
b) sticking the flexible coating on the substrate.

9. The method for applying a surface coating according to the preceding claim, wherein the amount of applied adhesive composition is greater than or equal to 200 g/m², preferably greater than or equal to 250 g/m², still preferably greater than or equal to 300 g/m², more particularly greater than or equal to 350 g/m².

10. The method for applying a surface coating according to claim 8 or 9, comprising before step a), a step for applying a weft or a non-woven reinforcing strip on the substrate.

11. The method for applying a surface coating according to claim 10, wherein the weft is selected from a grid, a woven or non-woven material.

12. The method for applying a surface coating according to one of claims 8 to 11, comprising between the steps a) and b), an additional step for drying the adhesive composition so as to obtain a membrane, followed by application of an adhesive composition different from the one according to one of claims 1 to 7 onto the membrane.

13. The method for applying a surface coating according to one of claims 8 to 12, comprising a subsequent step for roller-pressing the flexible surface coating.

14. A method for renovation of a substrate coated with a peelable adhesive film, obtained after drying of an adhesive composition according to one of claims 1 to 7, and with a flexible surface coating, said method comprising a step for pulling off the flexible surface coating.
